# EUROPEAN PATENT APPLICATION

(11) **EP 4 322 619 A1**
(43) Date of publication of application: **14.02.2024**
(21) Application number: 22798538.9
(22) Date of filing: 24.03.2022
(51) Int. Cl.: H04W 48/08

(54) **COMMUNICATION METHOD AND COMMUNICATION APPARATUS**

(30) Priority: 06.05.2021 CN 202110490027
(71) Applicant: Huawei Technologies Co., Ltd., Longgang Shenzhen, Guangdong 518129 (CN)
(72) Inventor: MA, Chuan, Shenzhen, Guangdong 518129 (CN); HAN, Feng, Shenzhen, Guangdong 518129 (CN); XIAO, Xiao, Shenzhen, Guangdong 518129 (CN); JIN, Yinghao, Shenzhen, Guangdong 518129 (CN)
(74) Representative: MERH-IP Matias Erny Reichl Hoffmann Patentanwälte PartG mbB
(86) International application number: PCT/CN2022/082880
(87) International publication number: WO 2022/233197

(57) **Abstract**

This application provides a communication method and a communication apparatus. The method includes: An access network device determines a first system information block and a second system information block of a cell, where the first system information block includes identifiers of n networks supporting external authentication, the second system information block includes identifiers of m groups and n bitmaps, the n bitmaps are sequentially in a one-to-one correspondence with the identifiers of the n networks included in the first system information block, each bitmap indicates a group supported by a corresponding network, m bits included in each bitmap are sequentially in a one-to-one correspondence with the identifiers of the m groups, and each bit indicates whether the corresponding network supports a group corresponding to the bit. The access network device sends the first system information block and the second system information block to a terminal device. In this application, a group supported by each network supporting external authentication is indicated by using a bitmap, to avoid repeated occurrence of an identifier of a same group in system information, and reduce a data amount of system information broadcast by the cell.

## Description

This application claims priority to Chinese Patent Application No. 202110490027.3, filed with the China National Intellectual Property Administration on May 6, 2021 and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a communication apparatus.

### BACKGROUND

Currently, network co-construction and sharing becomes a development trend of a 5th generation (5th generation, 5G) mobile communication technology. To quickly implement 5G network coverage and provide a 5G service, different operators use a cooperation manner of multiple operator core network (multiple operator core network, MOCN) sharing. That is, each operator independently constructs a core network of the operator, and shares a 5G base station and a frequency resource. For example, China Unicorn and China Telecom co-construct and share a 5G network, that is, a base station/cell supports both a network of China Unicorn and a network of China Telecom. Usually, a sharing manner in which one base station/cell is shared by a plurality of networks (in other words, one base station/cell supports a plurality of networks) may be referred to as radio access network (Radio Access Network, RAN) sharing.

It may be understood that for a cell that supports a plurality of networks (for example, a standalone non-public network (standalone non-public network, SNPN)) and external authentication, a system information block 1 of the cell usually may include an identifier of a credential holder group supported by each SNPN supporting external authentication. When groups supported by different SNPNs overlap, an identifier of an overlapped group repeatedly occurs in a broadcast message (namely, the system information block 1) of the cell. Because the identifier of the group occupies a large quantity of bits (for example, 68 bits), if the identifier of the group is repeatedly included, the broadcast message of the cell includes a large amount of redundant information. Therefore, how to reduce a data amount of system information broadcast by the cell becomes one of urgent problems to be resolved currently.

### SUMMARY

This application provides a communication method and a communication apparatus, to reduce a data amount of system information broadcast by a cell.

According to a first aspect, this application provides a communication method. The method includes: An access network device determines a first system information block of a cell, where the first system information block includes information about n networks, information about a network includes an identifier of the network and first indication information corresponding to the network, and the first indication information indicates that the network supports a terminal device in performing access by using a credential of a credential holder; the access network device determines a second system information block of the cell, where the second system information block includes identifiers of m credential holder groups and n bitmaps, the n bitmaps are sequentially in a one-to-one correspondence with identifiers of the n networks included in the first system information block, each bitmap indicates a credential holder group supported by a corresponding network, each bitmap includes m bits, the m bits are sequentially in a one-to-one correspondence with the identifiers of the m credential holder groups, each bit indicates whether the corresponding network supports a credential holder group corresponding to the bit, and m and n are integers greater than 0; and the access network device sends the first system information block and the second system information block to a terminal device.

In this application, the first system information block includes identifiers of all networks (for example, SNPNs) supported by the current cell, the second system information block includes identifiers of groups supported by all the SNPNs supported by the current cell (an identifier of each group is included only once), and includes a plurality of bitmaps, and each bitmap indicates a group supported by one SNPN supporting external authentication. The several bitmaps included in the second system information block are sequentially in a one-to-one correspondence with the identifiers that are of the SNPNs supporting external authentication and that are included in the first system information block, and bits included in each bitmap are sequentially in a one-to-one correspondence with the identifiers of the groups included in the first system information block. The group supported by the SNPN supporting external authentication is indicated by using a bitmap, so that a quantity of bits required for indicating the group supported by the SNPN in a system information block can be reduced. In a "sequential one-to-one correspondence" manner, the SNPN may be implicitly associated with group information, to avoid a case in which an additional bit is added to the system information block (for example, the first system information block or the second system information block) to indicate a correspondence between the bitmaps in the second system information block and the SNPNs supporting external authentication in the first system information block and a case in which an additional bit is added to the system information block (for example, the first system information block or the second system information block) to indicate a correspondence between the bits in the bitmap and the identifiers of the groups. Therefore, a data amount of system information broadcast by the cell is reduced, and transmission resources are saved.

In a possible implementation, the first system information block is a system information block 1.

In a possible implementation, the second system information block is a system information block other than the system information block 1.

In this application, when the second system information block is a system information block other than the system information block 1, the second system information block may be broadcast as required or sent in a unicast manner. Therefore, an amount broadcast by the cell can be reduced, and transmission resources can be saved.

In a possible implementation, the second system information block further includes second indication information, and the second indication information indicates whether to use a bitmap to indicate a credential holder group supported by a network that supports the terminal device in performing access by using the credential of the credential holder; and
that the second system information block includes identifiers of m credential holder groups and n bitmaps is specifically:
if the second indication information indicates to use a bitmap to indicate the credential holder group supported by the network that supports the terminal device in performing access by using the credential of the credential holder, the second system information block includes the identifiers of the m credential holder groups and the n bitmaps.

In this application, when a large quantity of groups supported by different SNPNs overlap, a group supported by each network is indicated by using a bitmap, so that a data amount broadcast by the cell can be reduced. In addition, the second indication information is added, so that UE can identify a manner used by the cell to indicate the group supported by the network supporting external authentication, and therefore can correctly parse content of a broadcast message, to improve communication reliability.

In a possible implementation, if the second indication information indicates not to use a bitmap to indicate the credential holder group supported by the network that supports the terminal device in performing access by using the credential of the credential holder, the second system information block includes an identifier of a credential holder group supported by each of the n networks.

In this application, when groups supported by different SNPNs do not overlap or only a small quantity of groups overlap, an identifier of a group supported by each network is directly indicated to indicate the group supported by each network, so that a data amount broadcast by the cell can be reduced. In addition, the second indication information is added, so that UE can identify a manner used by the cell to indicate the group supported by the network supporting external authentication, and therefore can correctly parse content of a broadcast message, to improve communication reliability.

In a possible implementation, the network is a standalone non-public network SNPN.

According to a second aspect, this application provides a communication method. The method includes: A terminal device receives a first system information block and a second system information block from an access network device, where the first system information block includes information about n networks, information about a network includes an identifier of the network and first indication information corresponding to the network, the first indication information indicates that the network supports a terminal device in performing access by using a credential of a credential holder, the second system information block includes identifiers of m credential holder groups and n bitmaps, the n bitmaps are sequentially in a one-to-one correspondence with identifiers of the n networks included in the first system information block, each bitmap indicates a credential holder group supported by a corresponding network, each bitmap includes m bits, the m bits are sequentially in a one-to-one correspondence with the identifiers of the m credential holder groups, each bit indicates whether the corresponding network supports a credential holder group corresponding to the bit, and m and n are integers greater than 0; and the terminal device performs network selection based on the first system information block and the second system information block.

In a possible implementation, the first system information block is a system information block 1.

In a possible implementation, the second system information block is a system information block other than the system information block 1.

In a possible implementation, the second system information block further includes second indication information, and the second indication information indicates whether to use a bitmap to indicate a credential holder group supported by a network that supports the terminal device in performing access by using the credential of the credential holder; and
that the second system information block includes identifiers of m credential holder groups and n bitmaps is specifically:
if the second indication information indicates to use a bitmap to indicate the credential holder group supported by the network that supports the terminal device in performing access by using the credential of the credential holder, the second system information block includes the identifiers of the m credential holder groups and the n bitmaps.

In a possible implementation, if the second indication information indicates not to use a bitmap to indicate the credential holder group supported by the network that supports the terminal device in performing access by using the credential of the credential holder, the second system information block includes an identifier of a credential holder group supported by each of the n networks.

In a possible implementation, the network is a standalone non-public network SNPN.

According to a third aspect, this application provides a communication method. The method includes: An access network device determines a system information block of a cell, where the system information block includes information about n networks, identifiers of m credential holder groups, and k bitmaps, information about a network includes an identifier of the network and first indication information corresponding to the network, the first indication information indicates that the network supports a terminal device in performing access by using a credential of a credential holder, one bitmap indicates a credential holder group supported by one corresponding network, each bitmap includes m bits, the m bits are sequentially in a one-to-one correspondence with the identifiers of the m credential holder groups, each bit indicates whether a corresponding network supports a credential holder group corresponding to the bit, m and n are integers greater than 0, and k is an integer less than or equal to n; and the access network device sends the system information block to a terminal device.

In this application, the first system information block of the cell includes identifiers of groups supported by all networks (for example, SNPNs) of the cell (an identifier of each group is included only once), and includes several bitmaps (bitmap) used to indicate a group supported by each SNPN supporting external authentication. Bits included in each bitmap are sequentially in a one-to-one correspondence with the identifiers of the groups included in the first system information block. Because the group identifier has a large quantity of bits, the group supported by the SNPN supporting external authentication is indicated by using a bitmap, to avoid repeated occurrence of an identifier of a same group in the first system information block. Therefore, a data amount of system information broadcast by the cell is reduced (that is, a size of the first system information block is reduced). In addition, in a "sequential one-to-one correspondence" manner, the bitmap may be implicitly associated with the group identifier, to avoid a case in which an additional bit is added to the system information block to indicate a correspondence between the bits in the bitmap and the identifiers of the groups. Therefore, a data amount of system information broadcast by the cell is reduced, and transmission resources are saved.

In a possible implementation, the system information block is a system information block 1.

In a possible implementation, the network is a standalone non-public network SNPN.

According to a fourth aspect, this application provides a communication method. The method includes: A terminal device receives a system information block from an access network device, where the system information block includes information about n networks, identifiers of m credential holder groups, and k bitmaps, information about a network includes an identifier of the network and first indication information corresponding to the network, the first indication information indicates that the network supports a terminal device in performing access by using a credential of a credential holder, one bitmap indicates a credential holder group supported by one corresponding network, each bitmap includes m bits, the m bits are sequentially in a one-to-one correspondence with the identifiers of the m credential holder groups, each bit indicates whether a corresponding network supports a credential holder group corresponding to the bit, m and n are integers greater than 0, and k is an integer less than or equal to n; and the terminal device performs network selection based on the system information block.

In a possible implementation, the system information block is a system information block 1.

In a possible implementation, the network is a standalone non-public network SNPN.

According to a fifth aspect, this application provides a communication apparatus. The communication apparatus is an access network device, and the apparatus includes: a processing unit, configured to determine a first system information block of a cell, where the first system information block includes information about n networks, information about a network includes an identifier of the network and first indication information corresponding to the network, and the first indication information indicates that the network supports a terminal device in performing access by using a credential of a credential holder, where the processing unit is configured to determine a second system information block of the cell, where the second system information block includes identifiers of m credential holder groups and n bitmaps, the n bitmaps are sequentially in a one-to-one correspondence with identifiers of the n networks included in the first system information block, each bitmap indicates a credential holder group supported by a corresponding network, each bitmap includes m bits, the m bits are sequentially in a one-to-one correspondence with the identifiers of the m credential holder groups, each bit indicates whether the corresponding network supports a credential holder group corresponding to the bit, and m and n are integers greater than 0; and a transceiver unit, configured to send the first system information block and the second system information block to a terminal device.

In a possible implementation, the first system information block is a system information block 1.

In a possible implementation, the second system information block is a system information block other than the system information block 1.

In a possible implementation, the second system information block further includes second indication information, and the second indication information indicates whether to use a bitmap to indicate a credential holder group supported by a network that supports the terminal device in performing access by using the credential of the credential holder; and
that the second system information block includes identifiers of m credential holder groups and n bitmaps is specifically:
if the second indication information indicates to use a bitmap to indicate the credential holder group supported by the network that supports the terminal device in performing access by using the credential of the credential holder, the second system information block includes the identifiers of the m credential holder groups and the n bitmaps.

In a possible implementation, if the second indication information indicates not to use a bitmap to indicate the credential holder group supported by the network that supports the terminal device in performing access by using the credential of the credential holder, the second system information block includes an identifier of a credential holder group supported by each of the n networks.

In a possible implementation, the network is a standalone non-public network SNPN.

According to a sixth aspect, this application provides a communication apparatus. The communication apparatus is a terminal device, and the apparatus includes: a transceiver unit, configured to receive a first system information block and a second system information block from an access network device, where the first system information block includes information about n networks, information about a network includes an identifier of the network and first indication information corresponding to the network, the first indication information indicates that the network supports a terminal device in performing access by using a credential of a credential holder, the second system information block includes identifiers of m credential holder groups and n bitmaps, the n bitmaps are sequentially in a one-to-one correspondence with identifiers of the n networks included in the first system information block, each bitmap indicates a credential holder group supported by a corresponding network, each bitmap includes m bits, the m bits are sequentially in a one-to-one correspondence with the identifiers of the m credential holder groups, each bit indicates whether the corresponding network supports a credential holder group corresponding to the bit, and m and n are integers greater than 0; and a processing unit, configured to perform network selection based on the first system information block and the second system information block.

In a possible implementation, the first system information block is a system information block 1.

In a possible implementation, the second system information block is a system information block other than the system information block 1.

In a possible implementation, the second system information block further includes second indication information, and the second indication information indicates whether to use a bitmap to indicate a credential holder group supported by a network that supports the terminal device in performing access by using the credential of the credential holder; and
that the second system information block includes identifiers of m credential holder groups and n bitmaps is specifically:
if the second indication information indicates to use a bitmap to indicate the credential holder group supported by the network that supports the terminal device in performing access by using the credential of the credential holder, the second system information block includes the identifiers of the m credential holder groups and the n bitmaps.

In a possible implementation, if the second indication information indicates not to use a bitmap to indicate the credential holder group supported by the network that supports the terminal device in performing access by using the credential of the credential holder, the second system information block includes an identifier of a credential holder group supported by each of the n networks.

In a possible implementation, the network is a standalone non-public network SNPN.

According to a seventh aspect, this application provides a communication apparatus. The communication apparatus is an access network device, and the apparatus includes: a processing unit, configured to determine a system information block of a cell, where the system information block includes information about n networks, identifiers of m credential holder groups, and k bitmaps, information about a network includes an identifier of the network and first indication information corresponding to the network, the first indication information indicates that the network supports a terminal device in performing access by using a credential of a credential holder, one bitmap indicates a credential holder group supported by one corresponding network, each bitmap includes m bits, the m bits are sequentially in a one-to-one correspondence with the identifiers of the m credential holder groups, each bit indicates whether a corresponding network supports a credential holder group corresponding to the bit, m and n are integers greater than 0, and k is an integer less than or equal to n; and a transceiver unit, configured to send the system information block to a terminal device.

In a possible implementation, the system information block is a system information block 1.

In a possible implementation, the network is a standalone non-public network SNPN.

According to an eighth aspect, this application provides a communication apparatus. The communication apparatus is a terminal device, and the apparatus includes: a transceiver unit, configured to receive a system information block from an access network device, where the system information block includes information about n networks, identifiers of m credential holder groups, and k bitmaps, information about a network includes an identifier of the network and first indication information corresponding to the network, the first indication information indicates that the network supports a terminal device in performing access by using a credential of a credential holder, one bitmap indicates a credential holder group supported by one corresponding network, each bitmap includes m bits, the m bits are sequentially in a one-to-one correspondence with the identifiers of the m credential holder groups, each bit indicates whether a corresponding network supports a credential holder group corresponding to the bit, m and n are integers greater than 0, and k is an integer less than or equal to n; and a processing unit, configured to perform network selection based on the system information block.

In a possible implementation, the system information block is a system information block 1.

In a possible implementation, the network is a standalone non-public network SNPN.

According to a ninth aspect, this application provides a communication apparatus. The apparatus may be an access network device, an apparatus in an access network device, or an apparatus that can be used together with an access network device. The communication apparatus may alternatively be a chip system. The communication apparatus may perform the method according to the first aspect or the third aspect. A function of the communication apparatus may be implemented by hardware, or may be implemented by hardware by executing corresponding software. The hardware or the software includes one or more units or modules corresponding to the function. The unit or module may be software and/or hardware. For operations performed by the communication apparatus and beneficial effects thereof, refer to the method according to the first aspect or the third aspect and the beneficial effects thereof. Repeated parts are not described.

According to a tenth aspect, this application provides a communication apparatus. The apparatus may be a terminal device, an apparatus in a terminal device, or an apparatus that can be used together with a terminal device. The communication apparatus may alternatively be a chip system. The communication apparatus may perform the method according to the second aspect or the fourth aspect. A function of the communication apparatus may be implemented by hardware, or may be implemented by hardware by executing corresponding software. The hardware or the software includes one or more units or modules corresponding to the function. The unit or module may be software and/or hardware. For operations performed by the communication apparatus and beneficial effects thereof, refer to the method according to the second aspect or the fourth aspect and the beneficial effects thereof. Repeated parts are not described.

According to an eleventh aspect, this application provides a communication apparatus. The communication apparatus includes a processor and a transceiver. The processor and the transceiver are configured to execute a computer program or instructions stored in at least one memory, to enable the apparatus to implement the method according to any one of the first aspect to the fourth aspect.

According to a twelfth aspect, this application provides a communication apparatus. The communication apparatus includes a processor, a transceiver, and a memory. The processor, the transceiver, and the memory are coupled. The processor and the transceiver are configured to implement the method according to any one of the first aspect to the fourth aspect.

According to a thirteenth aspect, this application provides a computer-readable storage medium. The storage medium stores a computer program or instructions. When the computer program or the instructions are executed by a computer, the method according to any one of the first aspect to the fourth aspect is implemented.

According to a fourteenth aspect, this application provides a computer program product including instructions. The computer program product includes computer program code. When the computer program code is run on a computer, the method according to any one of the first aspect to the fourth aspect is implemented.

### BRIEF DESCRIPTION OF DRAWINGS

FIG. 1 is a schematic architectural diagram of a communication system;
FIG. 2 is a schematic diagram of a system information block 1 of a cell;
FIG. 3 is another schematic diagram of a system information block 1 of a cell;
FIG. 4 is a schematic flowchart of a communication method according to an embodiment of this application;
FIG. 5 is a schematic diagram of a system information block of a cell according to an embodiment of this application;
FIG. 6 is another schematic diagram of a system information block of a cell according to an embodiment of this application;
FIG. 7 is another schematic diagram of a system information block of a cell according to an embodiment of this application;
FIG. 8 is another schematic diagram of a system information block of a cell according to an embodiment of this application;
FIG. 9 is another schematic diagram of a system information block of a cell according to an embodiment of this application;
FIG. 10 is a schematic flowchart of performing network selection by a terminal device according to an embodiment of this application;
FIG. 11 is another schematic flowchart of a communication method according to an embodiment of this application;
FIG. 12 is another schematic diagram of a system information block of a cell according to an embodiment of this application;
FIG. 13 is another schematic diagram of a system information block of a cell according to an embodiment of this application;
FIG. 14 is another schematic flowchart of performing network selection by a terminal device according to an embodiment of this application;
FIG. 15 is a schematic diagram of a structure of a communication apparatus according to an embodiment of this application;
FIG. 16 is a schematic diagram of a structure of another communication apparatus according to an embodiment of this application; and
FIG. 17 is another schematic flowchart of a communication method according to an embodiment of this application.

### DESCRIPTION OF EMBODIMENTS

The following clearly describes the technical solutions in embodiments of this application with reference to the accompanying drawings in embodiments of this application.

In descriptions of this application, unless otherwise specified, "/" means "or". For example, A/B may represent A or B. The term "and/or" in this specification merely describes an association relationship between associated objects, and represents that three relationships may exist. For example, A and/or B may represent the following three cases: Only A exists, both A and B exist, and only B exists. In addition, "at least one" means one or more, and "a plurality of" means two or more. Words such as "first" and "second" do not limit a quantity and an execution sequence, and the words such as "first" and "second" do not indicate a definite difference.

In this application, the word such as "example" or "for example" is used to represent giving an example, an illustration, or a description. Any embodiment or design solution described as an "example" or "for example" in this application should not be explained as being more preferred or having more advantages than another embodiment or design solution. Exactly, use of the word such as "example" or "for example" is intended to present a related concept in a specific manner.

The technical solutions in embodiments of this application may be applied to various communication systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system or a new radio (new radio, NR) system, and a future communication system. This is not limited herein. Usually, this application may be applied to an external authentication scenario of an SNPN network.

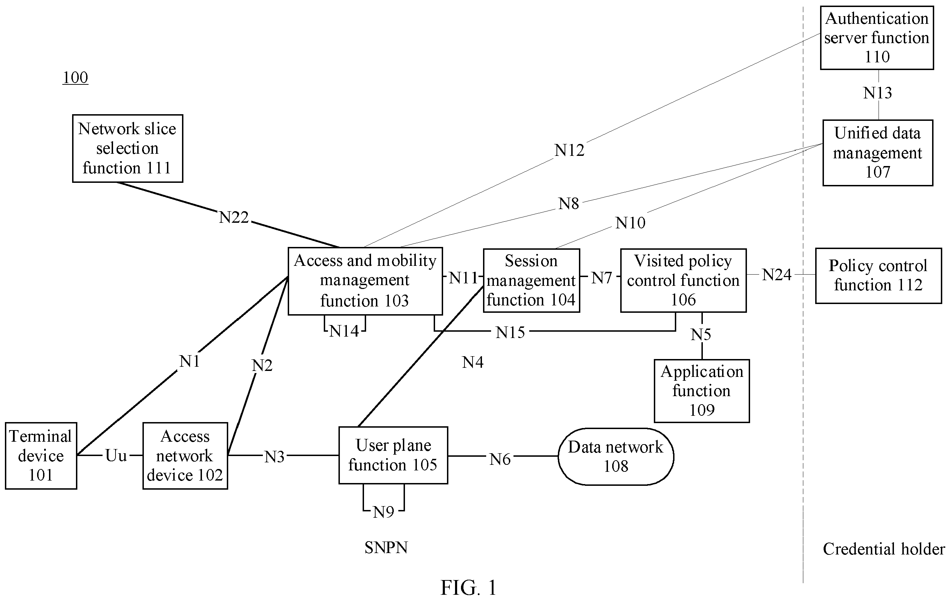

FIG. 1 is a schematic architectural diagram of a communication system. As shown in FIG. 1, the communication system 100 mainly includes a terminal device (user equipment, UE) 101, an access network (access network, AN) device 102, an access and mobility management function (access and mobility management function, AMF) entity 103, a session management function (session management function, SMF) entity 104, a user plane function (user plane function, UPF) entity 105, a policy control function (policy control function, vPCF) entity 106 of an SNPN, a unified data management (unified data management, UDM) entity 107, a data network (data network, DN) 108, an application function (application function, AF) entity 109, an authentication server function (authentication server function, AUSF) entity 110, a network slice selection function (network slice selection function, NSSF) entity 111, and a policy control function (policy control function, hPCF) entity 112 of a credential holder.

In the communication system 100, the UDM entity 107 is a subscription database in a core network, stores subscription data of a user in a 5G network, and is responsible for functions related to authentication of the user. The functions specifically include authentication credential handling, user identification handling, subscription information management, access authorization, and the like. The AMF entity 103 provides a mobility management function in the core network, and is mainly responsible for access and mobility control, including registration management (registration management, RM), connection management (connection management, CM), access authentication, access authorization, reachability management, mobility management, and the like. The SMF entity 104 is a session management function in the core network. In addition to performing mobility management for the UE 101, the AMF entity 103 is further responsible for forwarding a session management-related message between the UE 101 and the SMF entity 104. The PCF entity 106 is a policy management function in the core network, and is responsible for formulating policies related to mobility management, session management, charging, and the like for the UE 101. The UPF entity 105 is a user plane function in the core network, performs data transmission with an external data network through an N6 interface, performs data transmission with the AN device 102 through an N3 interface, and mainly provides user plane support, including a connection point between a PDU session and a data network, data packet routing and forwarding, data packet inspection, user plane policy enforcement, QoS handling for a user plane, downlink data packet buffering, downlink data notification triggering, and the like. After the UE 101 accesses the 5G network through a Uu interface, a protocol data unit (protocol data unit, PDU) session data connection from the UE 101 to the UPF entity 105 is recorded under control of the SMF entity 104, to perform data transmission. The AMF entity 103 and the SMF entity 104 respectively obtain the subscription data of the user from the UDM entity 107 through an N8 interface and an N10 interface, and obtain policy data from the PCF entity 106 through an N15 interface and an N7 interface. The AUSF 110 is mainly responsible for providing a security-related function, for example, authentication.

In the communication system 100, the UE 101 establishes an access stratum connection to the AN device 102 through the Uu interface, to exchange an access stratum message and transmit wireless data. The UE 101 establishes a non-access stratum (non-access stratum, NAS) connection to the AMF entity 103 through an N1 interface, to exchange a NAS message. The AN device 102 is connected to the AMF entity 103 through an N2 interface, and the AN device 102 is connected to the UPF entity 105 through the N3 interface. A plurality of UPF entities 105 are connected to each other through an N9 interface. The UPF entity 105 is connected to the DN 108 through the N6 interface, and the UPF entity 105 is connected to the SMF entity 104 through an N4 interface. The SMF entity 104 is connected to the PCF entity 106 through the N7 interface, the SMF entity 104 is connected to the UDM entity 107 through the N10 interface, the SMF entity 104 controls the UPF entity 105 through the N4 interface, and the SMF entity 104 is connected to the AMF entity 103 through an N11 interface. A plurality of AMF entities 103 are connected to each other through an N14 interface, the AMF entity 103 is connected to the UDM entity 107 through the N8 interface, the AMF entity 103 is connected to the AUSF entity 110 through an N12 interface, the AMF entity 103 is connected to the NSSF entity 111 through an N22 interface, and the AMF entity 103 is connected to the PCF entity 106 through the N15 interface. The PCF entity 106 is connected to the AF entity 109 through an N5 interface. The AUSF entity 110 is connected to the UDM entity 107 through an N13 interface. The policy control function (policy control function, vPCF) entity 106 of an SNPN is connected to the policy control function (policy control function, hPCF) entity 112 of a credential holder through an N24 interface. The access network (access network, AN) device 102, the AMF entity 103, the SMF entity 104, the UPF entity 105, the vPCF 106, the DN 108, the AF entity 109, and the NSSF entity 111 are network elements of an SNPN accessed by the terminal device UE 101, and the SNPN is an SNPN network. The UDM entity 107, the AUSF entity 110, and the hPCF entity 112 are network elements of a credential holder of the terminal device UE 101, and the credential holder is an SNPN network or a PLMN network.

In addition, a network exposure function (network exposure function, NEF) entity further exists in the communication system 100, and is configured to: interface with a third-party application server, and transfer information between a core network node and a third-party application.

It should be understood that a name of an interface between network elements in this application is merely an example, and the interface between the network elements may have another name. The name of the interface is not limited in this application.

It should be understood that FIG. 1 is merely an example architectural diagram. In addition to the functional units shown in FIG. 1, the network architecture may further include another functional unit or functional network element. This is not limited in this embodiment of this application.

It should be further understood that the functional units of the core network may work independently, or may be combined to implement some control functions. For example, the AMF, the SMF, and the PCF may be combined to serve as a management device, to implement access control and mobility management functions such as access authentication, security encryption, and location registration of the terminal device, session management functions such as user plane transmission path recording, release, and change, and functions such as analysis of data (for example, congestion) related to some slices (slice) and data related to the terminal device. As a gateway device, the UPF mainly implements functions such as user plane data routing and forwarding, for example, is responsible for filtering a data packet of the terminal device, transmitting/forwarding data, controlling a rate, and generating charging information.

As network co-construction and sharing becomes a development trend of 5G, to efficiently implement 5G network coverage, quickly form a 5G service capability, enhance market competitiveness of a 5G network and service, improve network efficiency and asset operation efficiency, and achieve mutual benefit and win-win, different operators use a cooperation manner of MOCN sharing. That is, each operator independently constructs a core network of the operator, and shares a 5G base station and a frequency resource. For example, China Unicorn and China Telecom co-construct and share a 5G network, that is, a base station supports both a network of China Unicorn and a network of China Telecom. Usually, a sharing manner in which one access network device/cell is shared by a plurality of networks (in other words, one access network device/cell supports a plurality of networks) may be referred to as RAN sharing. For example, a base station/cell is shared by a PLMN 1, a PLMN 2, a PLMN 3, an SNPN 1, and an SNPN 2 (in other words, the base station/cell supports the PLMN 1, the PLMN 2, the PLMN 3, the SNPN 1, and the SNPN 2).

A non-public network (non-public network, NPN) may also be referred to as a private network, and is a network corresponding to a PLMN (which may also be referred to as a public network). Usually, the NPN may be used for non-public purposes. For example, internal networks constructed in factories, schools, and business districts are private networks. NPNs may be classified into two types: a standalone NPN (namely, an SNPN) and a public network integrated NPN (public network integrated NPN, PNI-NPN). Usually, the SNPN does not depend on a function of the public network, but the PNI-NPN needs to depend on a function of the public network. It may be understood that all NPNs in the following embodiments of this application are SNPNs. One SNPN may correspond to one network identifier (SNPN ID), and the identifier is obtained by splicing a PLMN ID and a network identifier (network ID, NID), that is, SNPN ID = PLMN ID + NID. The PLMN ID may be a PLMN ID dedicated to the private network (for example, some PLMN IDs reserved by the International Telecommunication Union are dedicated to the private network), or may be a PLMN ID held by an operator (for example, a PLMN ID of an SNPN constructed by an operator for an enterprise may be set to a PLMN ID held by the operator). The NID is used to identify different SNPNs with a same PLMN ID.

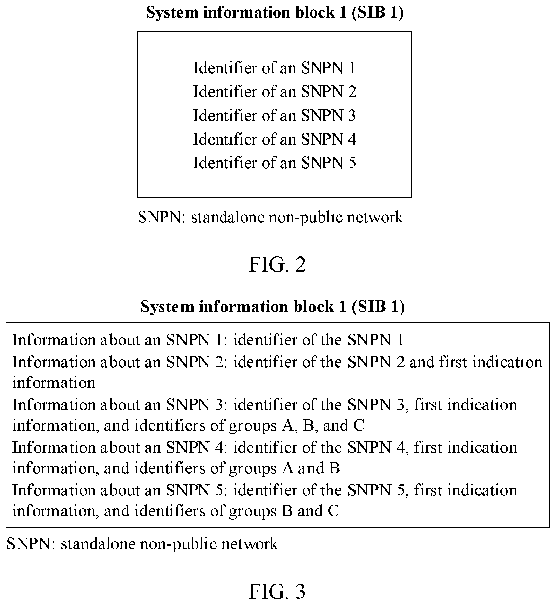

It should be understood that when a base station/cell supports a plurality of networks, a system information block 1 (system information block 1, SIB 1) broadcast by the base station may include identifiers of all networks supported by the base station/cell. For example, FIG. 2 is a schematic diagram of a system information block 1 of a cell. As shown in FIG. 2, if a base station/cell supports an SNPN 1 to an SNPN 5, a SIB 1 of the base station/cell may include identifiers of the five networks: an identifier of the SNPN 1, an identifier of the SNPN 2, an identifier of the SNPN 3, an identifier of the SNPN 4, and an identifier of the SNPN 5.

It should be further understood that when UE accesses an SNPN, the SNPN may perform authentication (authentication), or referred to as identity authentication, on the UE. Usually, the UE holds a credential (credential) of a network to be accessed. Therefore, the UE may perform authentication in the SNPN by using a credential (credential) of the SNPN. External authentication means that the UE performs authentication in a credential holder (credential holder, CH) by using a credential of the credential holder. The credential holder in this application may be a network other than the SNPN, or may be an independent authentication server. Several credential holders may form a credential holder group (credential holder group). Each credential holder group (which is referred to as a group for short for ease of description) may be marked by using an identifier of the credential holder group (ID of credential holder group) (or referred to as a group identifier for network selection (group ID for network selection, GIN)). For ease of description, the "identifier of the credential holder group" may be referred to as a group identifier group ID for short.

It may be understood that if a cell supports one SNPN, and the SNPN supports external authentication, a broadcast message of the SNPN includes: (1) indication information (which is described as first indication information in the following embodiments of this application for ease of understanding), indicating that the SNPN supports the UE in performing access by using a credential of a credential holder; and (2) (optional) identifiers of several credential holder groups, indicating the credential holder groups supported by the SNPN. Based on information broadcast by the cell and a credential holder group corresponding to the credential used by the UE, the UE selects an appropriate cell for access and performs external authentication. If the broadcast message of the SNPN includes the first indication information but does not include an identifier of a group, the UE may independently determine whether to attempt to access the SNPN for external authentication (for example, a broadcast message of a cell does not include an identifier of a group, but the cell actually supports a group A. In this case, both UE that uses a credential of the group A and UE that uses a credential of another group can attempt to access the cell, but only the UE that uses the credential of the group A can be authenticated by the network).

It may be understood that if a cell supports a plurality of SNPNs (that is, a RAN sharing scenario), and the plurality of SNPNs include at least one SNPN supporting external authentication, information that is about each SNPN supporting external authentication and that is in a broadcast message of the SNPN may include first indication information and (optional) an identifier of a credential holder group. For example, FIG. 3 is another schematic diagram of a system information block 1 of a cell. As shown in FIG. 3, the cell supports an SNPN 1 to an SNPN 5 (or the cell is shared by the SNPN 1 to the SNPN 5). A SIB 1 includes information about the SNPN 1, information about an SNPN 2, information about an SNPN 3, information about an SNPN 4, and information about the SNPN 5. The information about the SNPN 1 includes an identifier of the SNPN 1, the information about the SNPN 2 includes an identifier of the SNPN 2 and first indication information, the information about the SNPN 3 includes an identifier of the SNPN 3, first indication information, and identifiers of groups A, B, and C, the information about the SNPN 4 includes an identifier of the SNPN 4, first indication information, and identifiers of groups A and B, and the information about the SNPN 5 includes an identifier of the SNPN 5, first indication information, and identifiers of groups B and C. The SNPN 1 does not support external authentication. The SNPN 2 supports external authentication, but no supported group is specified. The SNPN 3 supports external authentication, and supports the groups A, B, and C (that is, supports UE in performing access by using a credential of the group A, the group B, or the group C). The SNPN 4 supports external authentication, and supports the groups A and B (that is, supports the UE in performing access by using a credential of the group A or the group B). The SNPN 5 supports external authentication, and supports the groups B and C (that is, supports the UE in performing access by using a credential of the group B or the group C).

It may be understood that when the UE initiates connection setup/connection resume to a base station, the UE needs to select a network and a corresponding cell by using a system information block broadcast by the base station. Usually, the UE may be divided into a non-access stratum (non-access stratum, NAS) and an access stratum (access stratum, AS). The UE NAS is responsible for network selection, and the UE AS is responsible for cell selection and reselection. A procedure in which the UE selects a network and a cell is as follows: Step 1: The UE NAS selects a network, and notifies the UE AS of the selected network. Step 2: The UE AS selects an appropriate cell in the network, and initiates access in the cell.

It may be understood that for a cell that supports a plurality of SNPNs (that is, a RAN sharing scenario), where the plurality of SNPNs include at least one SNPN supporting external authentication, a system information block broadcast by the cell usually includes first indication information corresponding to each SNPN and an identifier of a credential holder group. When groups supported by different SNPNs overlap, an identifier of an overlapped group repeatedly occurs in a broadcast message of the cell. For example, in a broadcast message shown in FIG. 3, the identifier of the group A occurs twice, the identifier of the group B occurs for three times, and the identifier of the group C occurs twice. The identifier of the group occupies a large quantity of bits (bit) (usually 68 bits). Therefore, if the identifier of the group is repeatedly included, the broadcast message of the cell includes a large amount of redundant information. Therefore, how to avoid repeated inclusion of the identifier of the group in the broadcast message of the cell to reduce an amount broadcast by the cell becomes an urgent problem to be resolved currently.

Based on this, this application provides a communication method, to avoid repeated occurrence of an identifier of a same group in a broadcast message, and reduce a data amount broadcast by a cell.

The technical solutions provided in this application are described below in detail with reference to more accompanying drawings.

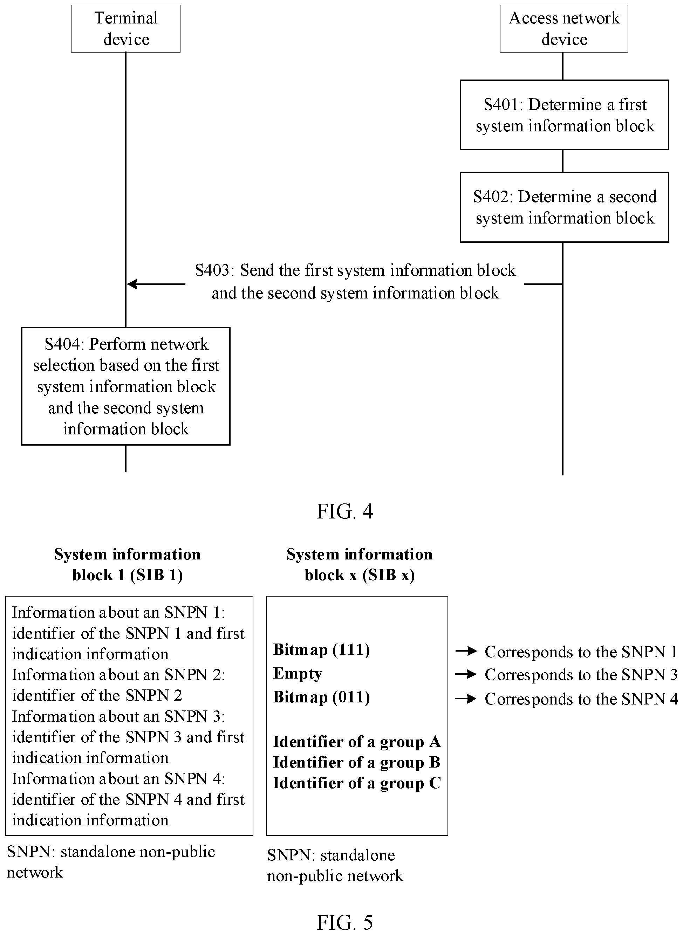

FIG. 4 is a schematic flowchart of a communication method according to an embodiment of this application. As shown in FIG. 4, the method includes the following steps S401 to S404.

S401: An access network device determines a first system information block of a cell.

In some feasible implementations, the access network device determines the first system information block of the cell. The first system information block includes information about n networks. Information about each of the n networks includes an identifier of the network and first indication information corresponding to the network. The first indication information indicates that the network supports a terminal device in performing access by using a credential of a credential holder (that is, the network supports external authentication). Herein, n is an integer greater than 0.

Optionally, the first system information block may further include information about h networks that do not support external authentication. The information about the h networks that do not support external authentication may be understood as that information about each of the h networks includes an identifier of the network, and does not include first indication information. In general, the first system information block of the cell may include information about all networks (namely, information about n+h networks) supported by the cell. All the networks supported by the cell may include the n networks (namely, networks supporting external authentication) that support UE in performing access by using the credential of the credential holder and/or the h networks (namely, networks that do not support external authentication) that do not support the UE in performing access by using the credential of the credential holder. This is not limited herein. Usually, if information about a network includes first indication information, it indicates that the network supports the UE in performing access by using the credential of the credential holder (that is, supports external authentication); or if information about a network does not include first indication information, it indicates that the network does not support the UE in performing access by using the credential of the credential holder (that is, does not support external authentication). Herein, h is an integer greater than or equal to 0.

The first system information block in this embodiment of this application may be a system information block 1 (namely, a SIB 1), or may be another system information block. This is not limited herein. For ease of understanding, in the following embodiments of this application, an example in which the first system information block is the SIB 1 is used for description. It may be understood that the network in this application may be an SNPN, another network (for example, a PLMN), or the like. This is not limited herein. For ease of understanding, in the following embodiments of this application, an SNPN is used as an example for description. An identifier of the SNPN includes a PLMN ID and a NID.

S402: The access network device determines a second system information block of the cell.

In some feasible implementations, the access network device determines the second system information block of the cell. The second system information block includes identifiers of m credential holder groups and n bitmaps (referred to as bitmaps (bitmaps) for short). The n bitmaps are sequentially in a one-to-one correspondence with identifiers of the n networks included in the first system information block. Each bitmap indicates a credential holder group supported by a corresponding network, and each bitmap includes m bits. The m bits are sequentially in a one-to-one correspondence with the identifiers of the m credential holder groups, and each bit indicates whether the corresponding network supports a credential holder group corresponding to the bit. Herein, both m and n are integers greater than 0. That is, the second system information block of the cell includes identifiers of groups supported by all SNPNs that support external authentication and that are of the cell (an identifier of each group is included only once) and a bitmap corresponding to each SNPN supporting external authentication. Rankings (or referred to as occurrence rankings) of bitmaps corresponding to SNPNs supporting external authentication in the second system information block are sequentially in a one-to-one correspondence with rankings of SNPNs that carry the first indication information and that are in the first system information block (therefore a quantity of bitmaps is the same as a quantity of SNPNs that carry the indication information and that are in the SIB 1). Each bitmap indicates a group supported by an SNPN corresponding to the bitmap. The bitmap may be empty, or the bitmap may include m bits. When a bitmap corresponding to an SNPN supporting external authentication is empty, it indicates that no group supported by the SNPN is specified. When a bitmap corresponding to an SNPN supporting external authentication includes m bits, the m bits are sequentially in a one-to-one correspondence with the identifiers of the groups included in the second system information block (therefore the quantity of bitmaps is the same as the quantity of SNPNs that carry the first indication information and that are in the SIB 1). Each bit indicates whether the SNPN supports a group corresponding to the bit. Usually, a value of the bit may be set to 0 or may be set to 1. It may be defined as follows: When the value is 1, it indicates that the SNPN supports the group corresponding to the bit; or when the value is 0, it indicates that the SNPN does not support the group corresponding to the bit. Optionally, it may alternatively be defined as follows: When the value is 1, it indicates that the SNPN does not support the group corresponding to the bit; or when the value is 0, it indicates that the SNPN supports the group corresponding to the bit. This is not limited herein. For ease of understanding, in the following embodiments of this application, descriptions are provided by using an example in which a value of 1 indicates that the SNPN supports the group corresponding to the bit, and a value of 0 indicates that the SNPN does not support the group corresponding to the bit.

The second system information block in this embodiment of this application is a system information block other than the system information block 1 (namely, the SIB 1). This is not limited herein. For example, the second system information block may be a system information block 10 (namely, a SIB 10), or the second system information block may be a system information block 2 (namely, a SIB 2). This is not limited herein. For ease of understanding, in the following embodiments of this application, an example in which the second system information block is a SIB x is used for description. Herein, x is not equal to 1.

For example, FIG. 5 is a schematic diagram of a system information block of a cell according to an embodiment of this application. As shown in FIG. 5, the cell is shared by an SNPN 1 to an SNPN 4. In the SIB 1 (namely, the first system information block), the SNPN 1, an SNPN 3, and the SNPN 4 carry first indication information, indicating that these SNPNs support the UE in performing access by using the credential of the credential holder; and an SNPN 2 does not carry first indication information, indicating that the SNPN 2 does not support the UE in performing access by using the credential of the credential holder. The SIB x (namely, the second system information block) includes three bitmaps. The three bitmaps sequentially correspond to SNPNs, namely, the SNPN 1, the SNPN 3, and the SNPN 4, that carry the indication information and that are in the SIB 1. A first bitmap is 111, indicating that the SNPN 1 supports groups A, B, and C. A second bitmap is empty, indicating that no group supported by the SNPN 3 is specified. A third bitmap is 011, indicating that the SNPN 4 supports groups B and C.

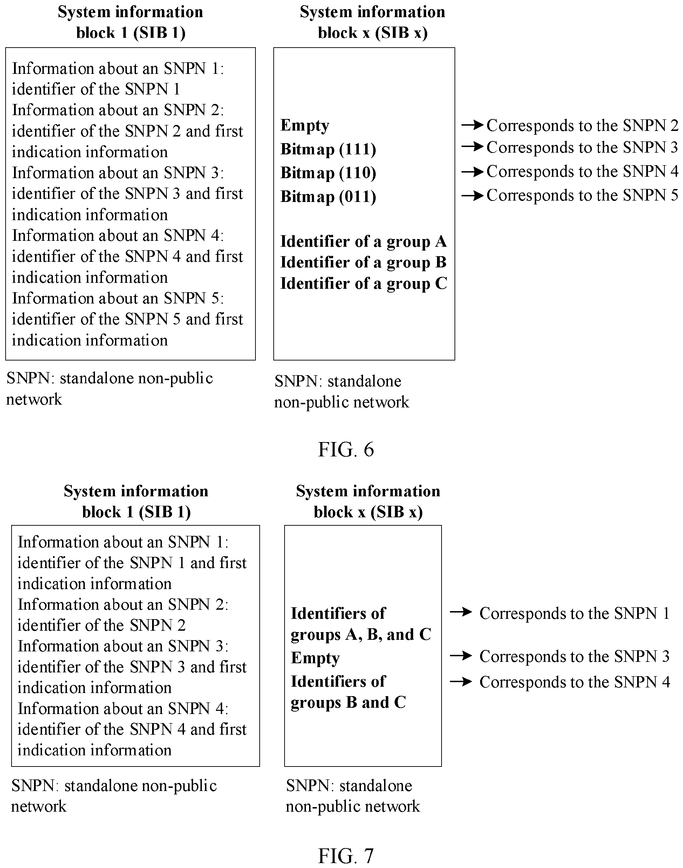

For another example, FIG. 6 is another schematic diagram of a system information block of a cell according to an embodiment of this application. As shown in FIG. 6, the cell is shared by an SNPN 1 to an SNPN 5. In the SIB 1, an SNPN 2, an SNPN 3, an SNPN 4, and the SNPN 5 carry first indication information, indicating that these SNPNs support the UE in performing access by using the credential of the credential holder; and the SNPN 1 does not carry first indication information, indicating that the SNPN does not support the UE in performing access by using the credential of the credential holder. The SIB x includes four bitmaps. The four bitmaps sequentially correspond to the SNPN 2, the SNPN 3, the SNPN 4, and the SNPN 5 that carry the first indication information and that are in the SIB 1. A first bitmap is empty, indicating that no group supported by the SNPN 2 is specified. A second bitmap is 111, indicating that the SNPN 3 supports groups A, B, and C. A third bitmap is 110, indicating that the SNPN 4 supports groups A and B. A fourth bitmap is 011, indicating that the SNPN 5 supports groups B and C.

Optionally, in some feasible implementations, in the SIB x (namely, the second system information block), in addition to the foregoing manner (which is referred to as a solution 1 for short) of using a bitmap to indicate a credential holder group supported by a network supporting external authentication (namely, a network that supports the terminal device in performing access by using the credential of the credential holder), a manner (which is referred to as a solution 2 for short) of directly indicating an identifier of the credential holder group supported by the network supporting external authentication may be directly used to indicate a credential holder group supported by each network supporting external authentication. When the solution 2 is used, the SIB x may include n group identifier lists, and the n group identifier lists are sequentially in a one-to-one correspondence with the rankings of the SNPNs that carry the first indication information and that are in the SIB 1 (therefore a quantity of group identifier lists is the same as the quantity of SNPNs that carry the first indication information and that are in the SIB 1). Each group identifier list includes an identifier of a group supported by an SNPN corresponding to the group identifier list. If a list is empty, it indicates that no group supported by an SNPN is specified.

For example, FIG. 7 is another schematic diagram of a system information block of a cell according to an embodiment of this application. As shown in FIG. 7, the cell is shared by an SNPN 1 to an SNPN 4. In the SIB 1 (namely, the first system information block), the SNPN 1, an SNPN 3, and the SNPN 4 carry first indication information, indicating that these SNPNs support the UE in performing access by using the credential of the credential holder; and an SNPN 2 does not carry first indication information, indicating that the SNPN 2 does not support the UE in performing access by using the credential of the credential holder. The SIB x (namely, the second system information block) includes three group identifier lists. The three group identifier lists sequentially correspond to the SNPN 1, the SNPN 3, and the SNPN 4 that carry the first indication information and that are in the SIB 1. A first group identifier list includes identifiers of groups A, B, and C, indicating that the SNPN 1 supports the groups A, B, and C. A second group identifier list is empty, indicating that no group supported by the SNPN 3 is specified. A third group identifier list includes identifiers of groups B and C, indicating that the SNPN 4 supports the groups B and C.

It may be understood that the solution 1 and the solution 2 are applicable to different scenarios. Usually, when a large quantity of groups supported by different SNPNs overlap, a small quantity of bits are required if the solution 1 is used to indicate the credential holder group supported by the network supporting external authentication; or when groups supported by different SNPNs do not overlap or only a small quantity of groups overlap, a small quantity of bits are required if the solution 2 is used to indicate the credential holder group supported by the network supporting external authentication. Therefore, the cell may select either of the two solutions (namely, the solution 1 and the solution 2) based on different scenarios. To enable the UE to identify a solution used by the cell, indication information (namely, second indication information) may be added to the SIB x (namely, the second system information block) to indicate the used solution (that is, the second indication information is added, so that the UE can identify the solution used by the cell, and therefore can correctly parse content of a broadcast message, to improve communication reliability). In other words, the second system information block may further include the second indication information. The second indication information indicates whether to use a bitmap to indicate a credential holder group supported by a network that supports the terminal device in performing access by using the credential of the credential holder. Therefore, that the second system information block includes the identifiers of m credential holder groups and n bitmaps may be understood as follows: If the second indication information indicates to use a bitmap to indicate the credential holder group supported by the network (namely, a network supporting external authentication) that supports the terminal device in performing access by using the credential of the credential holder, the second system information block includes the identifiers of the m credential holder groups and the n bitmaps (that is, the solution 1). Correspondingly, if the second indication information indicates not to use a bitmap to indicate the credential holder group supported by the network that supports the terminal device in performing access by using the credential of the credential holder, the second system information block includes an identifier of a credential holder group supported by each of the n networks (that is, the solution 2).

The second indication information may be of a Boolean type, and two values of the second indication information respectively correspond to the two solutions. For example, if the value is 0, it indicates that the solution 1 is used; or if the value is 1, it indicates that the solution 2 is used. For another example, the second indication information may be of an enumerated type, and different enumerated values respectively correspond to the two solutions. For example, if the value is "solution 1", it indicates that the solution 1 is used; or if the value is "solution 2", it indicates that the solution 2 is used. For another example, the second indication information may be of a choice (Choice) type, and two choice branches respectively correspond to the two solutions. This is not limited herein. For ease of understanding, in the following embodiments of this application, descriptions are provided by using an example in which the second indication information is of the Boolean type, a value of 0 indicates that the solution 1 is used, and a value of 1 indicates that the solution 2 is used.

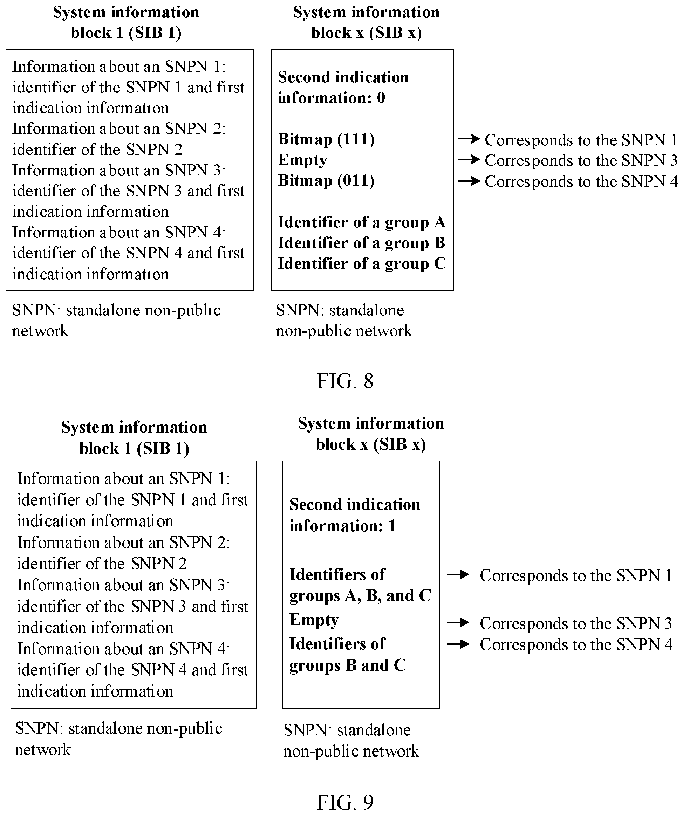

For example, FIG. 8 is another schematic diagram of a system information block of a cell according to an embodiment of this application. As shown in FIG. 8, the cell is shared by an SNPN 1 to an SNPN 4. In the SIB 1 (namely, the first system information block), the SNPN 1, an SNPN 3, and the SNPN 4 carry first indication information, indicating that these SNPNs support the UE in performing access by using the credential of the credential holder; and an SNPN 2 does not carry first indication information, indicating that the SNPN 2 does not support the UE in performing access by using the credential of the credential holder. The SIB x (namely, the second system information block) includes the second indication information, a value of the second indication information is 0 (that is, the solution 1 is used), and three bitmaps are included. The three bitmaps sequentially correspond to the SNPN 1, the SNPN 3, and the SNPN 4 that carry the first indication information and that are in the SIB 1. A first bitmap is 111, indicating that the SNPN 1 supports groups A, B, and C. A second bitmap is empty, indicating that no group supported by the SNPN 3 is specified. A third bitmap is 011, indicating that the SNPN 4 supports groups B and C.

For another example, FIG. 9 is another schematic diagram of a system information block of a cell according to an embodiment of this application. As shown in FIG. 9, the cell is shared by an SNPN 1 to an SNPN 4. In the SIB 1 (namely, the first system information block), the SNPN 1, an SNPN 3, and the SNPN 4 carry first indication information, indicating that these SNPNs support the UE in performing access by using the credential of the credential holder; and an SNPN 2 does not carry first indication information, indicating that the SNPN 2 does not support the UE in performing access by using the credential of the credential holder. The SIB x (namely, the second system information block) includes the second indication information, a value of the second indication information is 1 (that is, the solution 2 is used), and three group identifier lists are included. The three group identifier lists sequentially correspond to the SNPN 1, the SNPN 3, and the SNPN 4 that carry the first indication information and that are in the SIB 1. A first group identifier list includes identifiers of groups A, B, and C, indicating that the SNPN 1 supports the groups A, B, and C. A second group identifier list is empty, indicating that no group supported by the SNPN 3 is specified. A third group identifier list includes identifiers of groups B and C, indicating that the SNPN 4 supports the groups B and C.

It should be understood that there is no sequence between step S401 and step S402.

S403: The access network device sends the first system information block and the second system information block to a terminal device.

In some feasible implementations, after the access network device determines the first system information block and the second system information block, the access network device may send the first system information block and the second system information block to the terminal device. Usually, the access network device may send the SIB 1 (namely, the first system information block) to the terminal device in a broadcast manner, and send the SIB x (namely, the second system information block), where x≠1, to the terminal device as required or in a unicast manner. This is not limited herein. Therefore, the terminal device may perform network selection based on the received first system information block and the received second system information block.

S404: The terminal device performs network selection based on the first system information block and the second system information block.

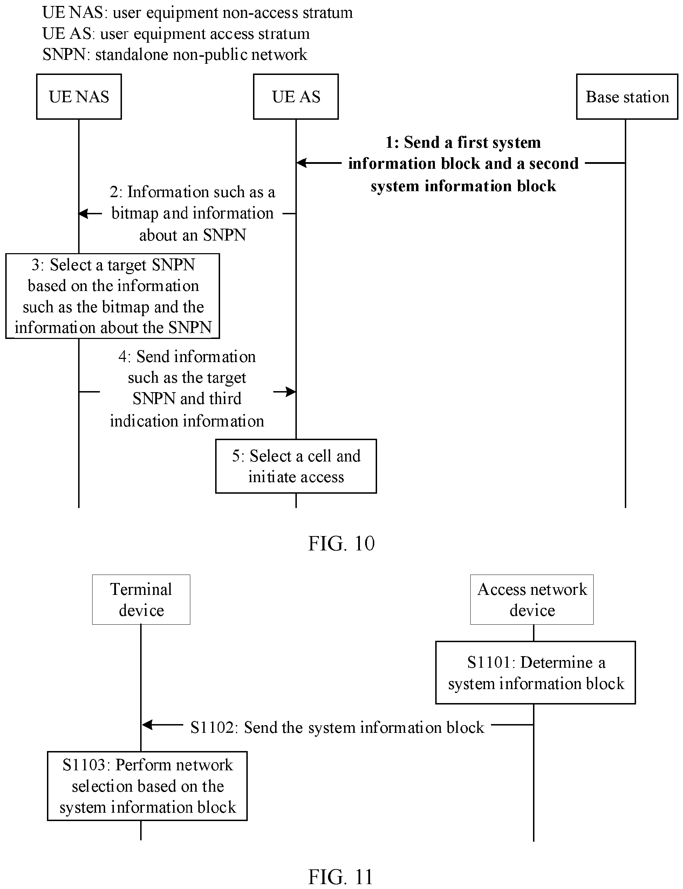

In some feasible implementations, after the terminal device receives the first system information block and the second system information block from the access network device, the terminal device may perform network selection based on the first system information block and the second system information block. For example, FIG. 10 is a schematic flowchart of performing network selection by a terminal device according to an embodiment of this application. As shown in FIG. 10, UE is divided into two layers: a UE NAS and a UE AS. Usually, the UE NAS is responsible for network selection, and the UE AS is responsible for cell selection and reselection. A procedure in which the UE selects a network based on system information of a cell is as follows:
Step 1: A base station sends a first system information block and a second system information block to the UE AS. The first system information block includes information about several SNPNs. The second system information block includes information such as identifiers of several credential holder groups and several bitmaps. Alternatively, the second system information block includes information such as second indication information, identifiers of several credential holder groups, and several bitmaps. Alternatively, the second system information block includes information such as second indication information and several group identifier lists. This is not limited herein. For ease of understanding, an example in which the second system information block includes information such as identifiers of several credential holder groups and several bitmaps is used below for description.
Step 2: The UE AS in the UE sends information such as the bitmap and the information about the SNPN to the UE NAS. Usually, after receiving the first system information block and the second system information block from the base station, the UE AS in the UE may parse the first system information block and the second system information block to obtain various types of information included in the first system information block and the second system information block, and then send some content (the information such as the bitmap and the information about the SNPN) in the first system information block and the second system information block to the UE NAS.
Step 3: The UE NAS selects a target SNPN based on the information such as the bitmap and the information about the SNPN. Specifically, the UE NAS may determine, based on the information such as the bitmap and the information about the SNPN received from the UE AS, a group supported by each SNPN (that is, deduce, based on a value of each bit in a bitmap of each SNPN and a group corresponding to each bit, the group supported by the SNPN), and select the target SNPN based on a group preconfigured for the UE. The selected target SNPN supports the group preconfigured for the UE (that is, several groups are preconfigured for the UE, and if the UE AS finds that a group supported by an SNPN includes the group preconfigured for the UE, the UE may select the SNPN; or if the UE finds that all groups supported by a plurality of SNPNs include the group preconfigured for the UE, the UE may select an SNPN from these SNPNs (randomly select an SNPN or select an SNPN based on a sequence and a preconfigured priority)).
Step 4: The UE NAS sends information such as the target SNPN and third indication information to the UE AS. In other words, the UE NAS may notify the UE AS of the selected target SNPN. The third indication information indicates that the UE AS selects a network supporting external authentication.
Step 5: The UE AS selects a cell and initiates access. That is, the UE AS may select a cell of the target SNPN (that is, the UE AS searches for a cell on one or more frequency bands, and if a cell whose system information includes an identifier of the target SNPN is found, and signal quality of the cell is greater than a threshold (the threshold is included in a SIB 1 of the cell), the UE AS selects the cell), and initiates random access in the cell.

In this embodiment of this application, the SIB 1 (namely, the first system information block) of the cell includes identifiers of all SNPNs of the cell, the SIB x (namely, the second system information block), where x≠1, of the cell includes identifiers of groups supported by all the SNPNs of the cell (an identifier of each group is included only once), and includes several bitmaps (bitmap), and each bitmap indicates a group supported by one SNPN. The several bitmaps are sequentially in a one-to-one correspondence with the SNPNs that support external authentication and that are included in the SIB 1, and bits included in each bitmap are sequentially in a one-to-one correspondence with the identifiers of the groups included in the SIB 1. It may be understood that group information (the identifier of the group and the bitmap) is included in the SIB x instead of the SIB 1, so that an amount broadcast by the cell can be reduced (because the SIB 1 of the cell always needs to be broadcast, and the SIB x may be broadcast as required; and if the group information is included in the SIB x, the cell may broadcast the group information only when the UE needs to know the group information, instead of always broadcasting the group information). The group supported by the SNPN is indicated by using a bitmap, so that a quantity of bits required for indicating the group supported by the SNPN in the SIB x can be reduced. In a "sequential one-to-one correspondence" manner, the SNPN may be implicitly associated with the group information, to avoid a case in which an additional bit is added to the system information block (for example, the first system information block or the second system information block) to indicate a correspondence between the bitmaps in the SIB x and the SNPNs supporting external authentication in the SIB 1 and a case in which an additional bit is added to the system information block (for example, the first system information block or the second system information block) to indicate a correspondence between the bits in the bitmap and the identifiers of the groups. Therefore, a data amount of system information broadcast by the cell is further reduced.

FIG. 11 is another schematic flowchart of a communication method according to an embodiment of this application. As shown in FIG. 11, the method includes the following steps S1101 to S1103.

S1101: An access network device determines a system information block of a cell.

In some feasible implementations, the access network device determines the system information block of the cell. The system information block includes information about n networks, identifiers of m credential holder groups, and k bitmaps. Information about a network includes an identifier of the network and first indication information corresponding to the network. The first indication information indicates that the network supports a terminal device in performing access by using a credential of a credential holder. One bitmap indicates a credential holder group supported by one corresponding network. Each bitmap includes m bits. The m bits are sequentially in a one-to-one correspondence with the identifiers of the m credential holder groups, and each bit indicates whether a corresponding network supports a credential holder group corresponding to the bit. Herein, m and n are integers greater than 0, and k is an integer less than or equal to n. That is, the system information block of the cell includes: 1. identifiers of several groups (group ID) (an identifier of each group is included only once); and 2. information about several SNPNs. Information about each SNPN includes: (1) an identifier (namely, an SNPN ID) of the SNPN; (2) first indication information indicating that the SNPN supports UE in performing access by using a credential of a credential holder; and (3) a bitmap indicating a group supported by the SNPN. The bitmap includes several bits. These bits are sequentially in a one-to-one correspondence with groups included in the SIB 1 (therefore a quantity of bits in the bitmap is the same as a quantity of identifiers of groups included in the SIB 1), and each bit indicates whether the SNPN supports a group corresponding to the bit. For example, a value of the bit may be 0 or 1. When the value is 1, it indicates that the SNPN supports the group corresponding to the bit; or when the value is 0, it indicates that the SNPN does not support the group corresponding to the bit.

Optionally, the first system information block may further include information about h networks that do not support external authentication. The information about the h networks that do not support external authentication may be understood as that information about each of the h networks includes an identifier of the network, and does not include first indication information. In general, the first system information block of the cell may include information about all networks (namely, information about n+h networks) supported by the cell. All the networks supported by the cell may include the n networks (namely, networks supporting external authentication) that support UE in performing access by using the credential of the credential holder and/or the h networks (namely, networks that do not support external authentication) that do not support the UE in performing access by using the credential of the credential holder. This is not limited herein. Usually, if information about a network includes first indication information, it indicates that the network supports the UE in performing access by using the credential of the credential holder (that is, supports external authentication); or if information about a network does not include first indication information, it indicates that the network does not support the UE in performing access by using the credential of the credential holder (that is, does not support external authentication). Herein, h is an integer greater than or equal to 0.

The system information block in this embodiment of this application may be a system information block 1 (namely, a SIB 1), or may be another system information block. This is not limited herein. For ease of understanding, in the following embodiments of this application, an example in which the system information block is the SIB 1 is used for description. It may be understood that the network in this application may be an SNPN, another network (for example, a PLMN), or the like. This is not limited herein. For ease of understanding, in the following embodiments of this application, an SNPN is used as an example for description. An identifier of the SNPN includes a PLMN ID and a NID.

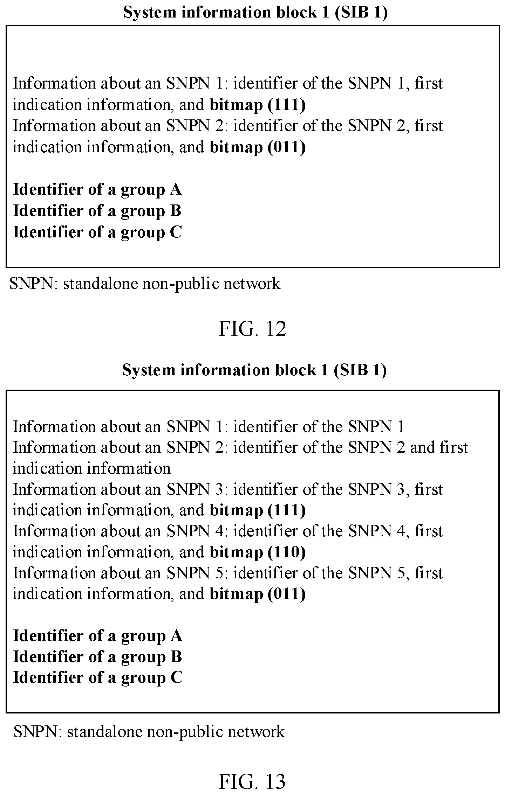

For example, FIG. 12 is another schematic diagram of a system information block of a cell according to an embodiment of this application. As shown in FIG. 12, the cell is shared by an SNPN 1 and an SNPN 2. The SIB 1 includes identifiers of groups A, B, and C, information about the SNPN 1, and information about the SNPN 2. The information about the SNPN 1 includes an identifier of the SNPN 1, first indication information, and a bitmap (111), and the information about the SNPN 2 includes an identifier of the SNPN 2, first indication information, and a bitmap (011). The bitmap (111) indicates that the SNPN 1 supports the groups A, B, and C, and the bitmap (011) indicates that the SNPN 2 supports groups B and C.

For another example, FIG. 13 is another schematic diagram of a system information block of a cell according to an embodiment of this application. As shown in FIG. 13, the cell is shared by an SNPN 1 to an SNPN 5. The SIB 1 includes information about the SNPN 1, information about an SNPN 2, information about an SNPN 3, information about an SNPN 4, and information about the SNPN 5. The information about the SNPN 1 includes an identifier of the SNPN 1, the information about the SNPN 2 includes an identifier of the SNPN 2 and first indication information, the information about the SNPN 3 includes an identifier of the SNPN 3, first indication information, and a bitmap (111), the information about the SNPN 4 includes an identifier of the SNPN 4, first indication information, and a bitmap (110), and the information about the SNPN 5 includes an identifier of the SNPN 5, first indication information, and a bitmap (O11). The SNPN 1 does not support external authentication (because the information about the SNPN 1 does not include first indication information). The SNPN 2 supports external authentication, but no supported group is specified. The SNPN 3 supports external authentication, and the bitmap (111) corresponding to the SNPN 3 indicates that the SNPN 3 supports groups A, B, and C, the bitmap (110) corresponding to the SNPN 4 indicates that the SNPN 4 supports groups B and C, and the bitmap (011) corresponding to the SNPN 5 indicates that the SNPN 5 supports groups B and C.

S 1102: The access network device sends the system information block to a terminal device.

In some feasible implementations, after the access network device determines the system information block, the access network device may send the system information block to the terminal device. The first system information block is the SIB 1. Therefore, the access network device may send the SIB 1 to the terminal device in a broadcast manner.

S1103: The terminal device performs network selection based on the system information block.

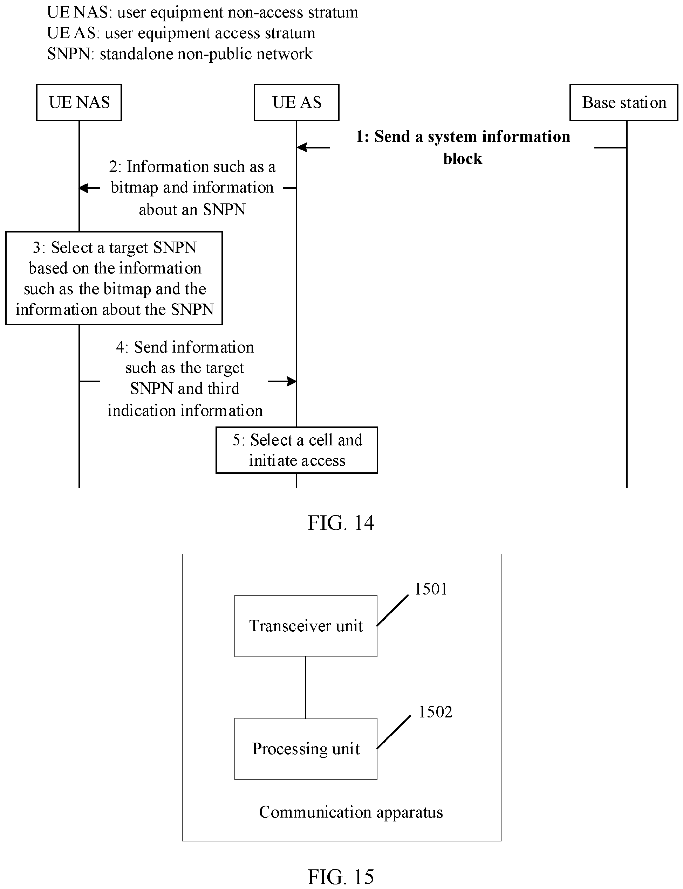

In some feasible implementations, after the terminal device receives the first system information block and the second system information block from the access network device, the terminal device may perform network selection based on the first system information block and the second system information block. For example, FIG. 14 is another schematic flowchart of performing network selection by a terminal device according to an embodiment of this application. As shown in FIG. 14, UE is divided into two layers: a UE NAS and a UE AS. Usually, the UE NAS is responsible for network selection, and the UE AS is responsible for cell selection and reselection. A procedure in which the UE selects a network based on system information of a cell is as follows:
Step 1: A base station sends a system information block to the UE AS. The system information block includes information such as information about several SNPNs, identifiers of several credential holder groups, and several bitmaps.
Step 2: The UE AS in the UE sends information such as the bitmap and the information about the SNPN to the UE NAS. Usually, after receiving the system information block from the base station, the UE AS in the UE may parse the system information block to obtain various types of information included in the system information block, and then send some content (the information such as the bitmap and the information about the SNPN) in the system information block to the UE NAS.
Step 3: The UE NAS selects a target SNPN based on the information such as the bitmap and the information about the SNPN. Specifically, the UE NAS may determine, based on the information such as the bitmap and the information about the SNPN received from the UE AS, a group supported by each SNPN (that is, deduce, based on a value of each bit in a bitmap of each SNPN and a group corresponding to each bit, the group supported by the SNPN), and select the target SNPN based on a group preconfigured for the UE. The selected target SNPN supports the group preconfigured for the UE (that is, several groups are preconfigured for the UE, and if the UE AS finds that a group supported by an SNPN includes the group preconfigured for the UE, the UE may select the SNPN; or if the UE finds that all groups supported by a plurality of SNPNs include the group preconfigured for the UE, the UE may select an SNPN from these SNPNs (randomly select an SNPN or select an SNPN based on a sequence and a preconfigured priority)).
Step 4: The UE NAS sends information such as the target SNPN and third indication information to the UE AS. In other words, the UE NAS may notify the UE AS of the selected target SNPN. The third indication information indicates that the UE AS selects a network supporting external authentication.
Step 5: The UE AS selects a cell and initiates access. That is, the UE AS may select a cell of the target SNPN (that is, the UE AS searches for a cell on one or more frequency bands, and if a cell whose system information includes an identifier of the target SNPN is found, and signal quality of the cell is greater than a threshold (the threshold is included in a SIB 1 of the cell), the UE AS selects the cell), and initiates random access in the cell.

In this embodiment of this application, the SIB 1 (namely, the first system information block) of the cell includes identifiers of groups supported by all SNPNs of the cell (an identifier of each group is included only once), and includes several bitmaps (bitmap) used to indicate a group supported by each SNPN supporting external authentication. Bits included in each bitmap are sequentially in a one-to-one correspondence with the identifiers of the groups included in the system information block. Because the group identifier has a large quantity of bits, the group supported by the SNPN is indicated by using a bitmap, to avoid repeated occurrence of an identifier of a same group in the SIB 1. Therefore, a quantity of bits included in the SIB 1 is reduced. In addition, in a "sequential one-to-one correspondence" manner, the bitmap may be implicitly associated with the group identifier, to avoid a case in which an additional bit is added to the system information block to indicate a correspondence between the bits in the bitmap and the identifiers of the groups. Therefore, a data amount of system information broadcast by the cell is further reduced, and transmission resources are saved.

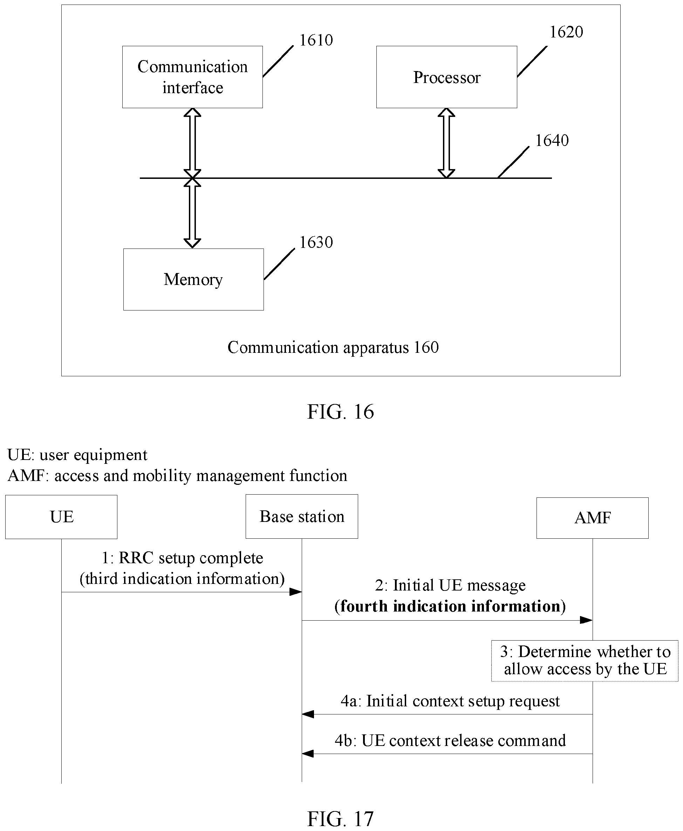

A communication apparatus provided in this application is described below in detail with reference to FIG. 15 and FIG. 16.

FIG. 15 is a schematic diagram of a structure of a communication apparatus according to an embodiment of this application. The communication apparatus shown in FIG. 15 may be configured to perform some or all functions of the access network device in the method embodiments described in FIG. 4 to FIG. 14. The apparatus may be an access network device, an apparatus in an access network device, or an apparatus that can be used together with an access network device. The communication apparatus may alternatively be a chip system. The communication apparatus shown in FIG. 15 may include a transceiver unit 1501 and a processing unit 1502. The processing unit 1502 is configured to process data. A receiving unit and a sending unit are integrated into the transceiver unit 1501. The transceiver unit 1501 may also be referred to as a communication unit. Alternatively, the transceiver unit 1501 may be split into a receiving unit and a sending unit. A processing unit 1502 and a transceiver unit 1501 below are similar to those. Details are not described below.

In an implementation, the processing unit 1502 is configured to determine a first system information block of a cell, where the first system information block includes information about n networks, information about a network includes an identifier of the network and first indication information corresponding to the network, and the first indication information indicates that the network supports a terminal device in performing access by using a credential of a credential holder;
the processing unit 1502 is configured to determine a second system information block of the cell, where the second system information block includes identifiers of m credential holder groups and n bitmaps, the n bitmaps are sequentially in a one-to-one correspondence with identifiers of the n networks included in the first system information block, each bitmap indicates a credential holder group supported by a corresponding network, each bitmap includes m bits, the m bits are sequentially in a one-to-one correspondence with the identifiers of the m credential holder groups, each bit indicates whether the corresponding network supports a credential holder group corresponding to the bit, and m and n are integers greater than 0; and
the transceiver unit 1501 is configured to send the first system information block and the second system information block to a terminal device.

In an implementation, the processing unit 1502 is configured to determine a system information block of a cell, where the system information block includes information about n networks, identifiers of m credential holder groups, and k bitmaps, information about a network includes an identifier of the network and first indication information corresponding to the network, the first indication information indicates that the network supports a terminal device in performing access by using a credential of a credential holder, one bitmap indicates a credential holder group supported by one corresponding network, each bitmap includes m bits, the m bits are sequentially in a one-to-one correspondence with the identifiers of the m credential holder groups, each bit indicates whether a corresponding network supports a credential holder group corresponding to the bit, m and n are integers greater than 0, and k is an integer less than or equal to n; and
the transceiver unit 1501 is configured to send the system information block to a terminal device.

For another possible implementation of the communication apparatus, refer to the related descriptions of the functions of the access network device in the method embodiments corresponding to FIG. 4 to FIG. 14. Details are not described herein.

FIG. 15 is a schematic diagram of a structure of a communication apparatus according to an embodiment of this application. The communication apparatus shown in FIG. 15 may be configured to perform some or all functions of the terminal device in the method embodiments described in FIG. 4 to FIG. 14. The apparatus may be a terminal device, an apparatus in a terminal device, or an apparatus that can be used together with a terminal device. The communication apparatus may alternatively be a chip system. The communication apparatus shown in FIG. 15 may include a transceiver unit 1501 and a processing unit 1502.

In an implementation, the transceiver unit 1501 is configured to receive a first system information block and a second system information block from an access network device, where the first system information block includes information about n networks, information about a network includes an identifier of the network and first indication information corresponding to the network, the first indication information indicates that the network supports a terminal device in performing access by using a credential of a credential holder, the second system information block includes identifiers of m credential holder groups and n bitmaps, the n bitmaps are sequentially in a one-to-one correspondence with identifiers of the n networks included in the first system information block, each bitmap indicates a credential holder group supported by a corresponding network, each bitmap includes m bits, the m bits are sequentially in a one-to-one correspondence with the identifiers of the m credential holder groups, each bit indicates whether the corresponding network supports a credential holder group corresponding to the bit, and m and n are integers greater than 0; and
the processing unit 1502 is configured to perform network selection based on the first system information block and the second system information block.

In an implementation, the transceiver unit 1501 is configured to receive a system information block from an access network device, where the system information block includes information about n networks, identifiers of m credential holder groups, and k bitmaps, information about a network includes an identifier of the network and first indication information corresponding to the network, the first indication information indicates that the network supports a terminal device in performing access by using a credential of a credential holder, one bitmap indicates a credential holder group supported by one corresponding network, each bitmap includes m bits, the m bits are sequentially in a one-to-one correspondence with the identifiers of the m credential holder groups, each bit indicates whether a corresponding network supports a credential holder group corresponding to the bit, m and n are integers greater than 0, and k is an integer less than or equal to n; and
the processing unit 1502 is configured to perform network selection based on the system information block.

For another possible implementation of the communication apparatus, refer to the related descriptions of the functions of the terminal device in the method embodiments corresponding to FIG. 4 to FIG. 14. Details are not described herein.

FIG. 16 is a schematic diagram of a structure of another communication apparatus according to an embodiment of this application. FIG. 16 shows a communication apparatus 160 according to an embodiment of this application. The communication apparatus 160 is configured to implement functions of the access network device in FIG. 4 to FIG. 14. The apparatus may be an access network device or an apparatus used in an access network device. The apparatus used in an access network device may be a chip system or a chip in the access network device. The chip system may include a chip, or may include a chip and another discrete device.

Alternatively, the communication apparatus 160 is configured to implement functions of the terminal device in FIG. 4 to FIG. 14. The apparatus may be a terminal device or an apparatus used in a terminal device. The apparatus used in a terminal device may be a chip system or a chip in the terminal device. The chip system may include a chip, or may include a chip and another discrete device.

The communication apparatus 160 includes at least one processor 1620, configured to implement a data processing function of the access network device or the terminal device in the method provided in embodiments of this application. The apparatus 160 may further include a communication interface 1610, configured to implement receiving and sending operations of the access network device or the terminal device in the method provided in embodiments of this application. In this embodiment of this application, the communication interface may be a transceiver, a circuit, a bus, a module, or another type of communication interface, and is configured to communicate with another device through a transmission medium. For example, the communication interface 1610 is used for an apparatus in the apparatus 160 to communicate with another device. The processor 1620 receives and sends data through the communication interface 1610, and is configured to implement the methods in FIG. 4 to FIG. 14 in the foregoing method embodiments.

The apparatus 160 may further include at least one memory 1630, configured to store program instructions and/or data. The memory 1630 is coupled to the processor 1620. The coupling in this embodiment of this application is indirect coupling or a communication connection between apparatuses, units, or modules, may be in an electrical form, a mechanical form, or another form, and is used for information exchange between the apparatuses, the units, or the modules. The processor 1620 may cooperate with the memory 1630. The processor 1620 may execute the program instructions stored in the memory 1630. At least one of the at least one memory may be included in the processor.

After the apparatus 160 is powered on, the processor 1620 may read a software program in the memory 1630, interpret and execute instructions of the software program, and process data of the software program. When data needs to be wirelessly sent, the processor 1620 performs baseband processing on the to-be-sent data, and then outputs a baseband signal to a radio frequency circuit (not shown in the figure), and the radio frequency circuit performs radio frequency processing on the baseband signal, and then sends a radio frequency signal to outside in a form of an electromagnetic wave through an antenna. When data is to be sent to the apparatus 160, the radio frequency circuit receives a radio frequency signal through the antenna, converts the radio frequency signal into a baseband signal, and outputs the baseband signal to the processor 1620, and the processor 1620 converts the baseband signal into data, and processes the data.

In another implementation, the radio frequency circuit and the antenna may be disposed independent of the processor 1620 that performs baseband processing. For example, in a distributed scenario, the radio frequency circuit and the antenna may be disposed remotely and independent of the communication apparatus.

A specific connection medium among the communication interface 1610, the processor 1620, and the memory 1630 is not limited in this embodiment of this application. In this embodiment of this application, the memory 1630, the processor 1620, and the communication interface 1610 are connected to each other through a bus 1640 in FIG. 16. The bus is represented by using a thick line in FIG. 16. A connection manner between other components is merely an example for description, and imposes no limitation. The bus may be classified into an address bus, a data bus, a control bus, and the like. For ease of representation, only one thick line is used to represent the bus in FIG. 16, but this does not mean that there is only one bus or only one type of bus.

When the apparatus 160 is specifically an apparatus used in an access network device or a terminal device, for example, when the apparatus 160 is specifically a chip or a chip system, the communication interface 1610 may output or receive a baseband signal. When the apparatus 160 is specifically an access network device or a terminal device, the communication interface 1610 may output or receive a radio frequency signal. In this embodiment of this application, the processor may be a general-purpose processor, a digital signal processor, an application-specific integrated circuit, a field programmable gate array or another programmable logic device, a discrete gate or a transistor logic device, or a discrete hardware component, and may implement or perform the methods, operations, and logical block diagrams disclosed in embodiments of this application. The general-purpose processor may be a microprocessor, any conventional processor, or the like. The operations in the methods disclosed with reference to embodiments of this application may be directly performed and completed by a hardware processor, or may be performed and completed by a combination of hardware in the processor and a software module.

An embodiment of this application further provides a computer-readable storage medium. The computer-readable storage medium stores instructions. When the instructions are run on a processor, the method procedures in the method embodiments in FIG. 4 to FIG. 14 are implemented.

An embodiment of this application further provides a computer program product. When the computer program product is run on a processor, the method procedures in FIG. 4 to FIG. 14 in the method embodiments are implemented.

Further, FIG. 17 is another schematic flowchart of a communication method according to an embodiment of this application. As shown in FIG. 17, a procedure in which UE accesses a network is as follows:
Step 1: The UE sends an RRC setup complete (RRC Setup Complete) message to a base station. The RRC setup complete message includes third indication information. The third indication information indicates that current access is used for an onboarding (onboarding) service.
Step 2: The base station sends an initial UE message (Initial UE Message) to an AMF. The initial UE message includes fourth indication information. The fourth indication information indicates that a cell to be accessed by the UE supports the onboarding service. Usually, the fourth indication information may occupy 1 bit. Specifically, when the initial UE message includes the fourth indication information, it indicates that the cell to be accessed by the UE supports the onboarding service; or when the initial UE message does not include the fourth indication information, it indicates that the cell to be accessed by the UE does not support the onboarding service.
Step 3: The AMF determines whether to allow access by the UE. Specifically, the AMF may determine, based on the fourth indication information in the initial UE message, whether to allow access by the UE. For example, when the UE is registered as an onboarding type or the UE requests the onboarding service, if the initial UE message includes the fourth indication information, the AMF allows access by the UE; or if the initial UE message does not include the fourth indication information, the AMF does not allow access by the UE.
Step 4a: The AMF sends an initial context setup request (Initial Context Setup Request) message to the base station. Usually, if the AMF allows access by the UE, the AMF sends the initial context setup request message to the base station.
Step 4b: The AMF sends a UE context release command (UE Context Release Command) message to the base station. Usually, if the AMF does not allow access by the UE, the AMF sends the UE context release command message to the base station.

It may be understood that in this embodiment of this application, the base station sends the fourth indication information to the AMF, so that the AMF can know whether the cell to be accessed by the UE supports the onboarding service, and then may determine whether to allow access by the UE.

It should be noted that for brief description, the foregoing method embodiments are represented as a series of action combinations. However, it should be appreciated by persons skilled in the art that this application is not limited to the described action sequence, because some operations may be performed in another sequence or simultaneously according to this application. It should be further appreciated by persons skilled in the art that all of embodiments described in this specification are preferred embodiments, and the involved actions and modules are not necessarily required by this application.

Mutual reference may be made to the descriptions of embodiments provided in this application, and the descriptions of embodiments have different focuses. For a part not described in detail in an embodiment, refer to related descriptions in another embodiment. For ease of description and brevity, for functions of the apparatuses and devices provided in embodiments of this application and operations performed by the apparatuses and devices, refer to related descriptions of the method embodiments of this application. The method embodiments and the apparatus embodiments may also be mutually referenced, combined, or cited.

Finally, it should be noted that the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of this application.

## Claims

1. A communication method, comprising:
determining, by an access network device, a first system information block of a cell, wherein the first system information block comprises information about n networks, information about a network comprises an identifier of the network and first indication information corresponding to the network, and the first indication information indicates that the network supports a terminal device in performing access by using a credential of a credential holder;
determining, by the access network device, a second system information block of the cell, wherein the second system information block comprises identifiers of m credential holder groups and n bitmaps, the n bitmaps are sequentially in a one-to-one correspondence with identifiers of the n networks comprised in the first system information block, each bitmap indicates a credential holder group supported by a corresponding network, each bitmap comprises m bits, the m bits are sequentially in a one-to-one correspondence with the identifiers of the m credential holder groups, each bit indicates whether the corresponding network supports a credential holder group corresponding to the bit, and m and n are integers greater than 0; and
sending, by the access network device, the first system information block and the second system information block to a terminal device.

2. The method according to claim 1, wherein the first system information block is a system information block 1.

3. The method according to claim 1 or 2, wherein the second system information block is a system information block other than the system information block 1.

4. The method according to any one of claims 1 to 3, wherein the second system information block further comprises second indication information, and the second indication information indicates whether to use a bitmap to indicate a credential holder group supported by a network that supports the terminal device in performing access by using the credential of the credential holder; and
that the second system information block comprises identifiers of m credential holder groups and n bitmaps is specifically:
if the second indication information indicates to use a bitmap to indicate the credential holder group supported by the network that supports the terminal device in performing access by using the credential of the credential holder, the second system information block comprises the identifiers of the m credential holder groups and the n bitmaps.

5. The method according to claim 4, wherein if the second indication information indicates not to use a bitmap to indicate the credential holder group supported by the network that supports the terminal device in performing access by using the credential of the credential holder, the second system information block comprises an identifier of a credential holder group supported by each of the n networks.

6. The method according to any one of claims 1 to 5, wherein the network is a standalone non-public network SNPN.

7. A communication method, comprising:
receiving, by a terminal device, a first system information block and a second system information block from an access network device, wherein the first system information block comprises information about n networks, information about a network comprises an identifier of the network and first indication information corresponding to the network, the first indication information indicates that the network supports a terminal device in performing access by using a credential of a credential holder, the second system information block comprises identifiers of m credential holder groups and n bitmaps, the n bitmaps are sequentially in a one-to-one correspondence with identifiers of the n networks comprised in the first system information block, each bitmap indicates a credential holder group supported by a corresponding network, each bitmap comprises m bits, the m bits are sequentially in a one-to-one correspondence with the identifiers of the m credential holder groups, each bit indicates whether the corresponding network supports a credential holder group corresponding to the bit, and m and n are integers greater than 0; and
performing, by the terminal device, network selection based on the first system information block and the second system information block.

8. The method according to claim 7, wherein the first system information block is a system information block 1.

9. The method according to claim 7 or 8, wherein the second system information block is a system information block other than the system information block 1.

10. The method according to claim 7 or 8, wherein the second system information block further comprises second indication information, and the second indication information indicates whether to use a bitmap to indicate a credential holder group supported by a network that supports the terminal device in performing access by using the credential of the credential holder; and
that the second system information block comprises identifiers of m credential holder groups and n bitmaps is specifically:
if the second indication information indicates to use a bitmap to indicate the credential holder group supported by the network that supports the terminal device in performing access by using the credential of the credential holder, the second system information block comprises the identifiers of the m credential holder groups and the n bitmaps.

11. The method according to claim 10, wherein if the second indication information indicates not to use a bitmap to indicate the credential holder group supported by the network that supports the terminal device in performing access by using the credential of the credential holder, the second system information block comprises an identifier of a credential holder group supported by each of the n networks.

12. The method according to any one of claims 7 to 11, wherein the network is a standalone non-public network SNPN.

13. A communication method, comprising:
determining, by an access network device, a system information block of a cell, wherein the system information block comprises information about n networks, identifiers of m credential holder groups, and k bitmaps, information about a network comprises an identifier of the network and first indication information corresponding to the network, the first indication information indicates that the network supports a terminal device in performing access by using a credential of a credential holder, one bitmap indicates a credential holder group supported by one corresponding network, each bitmap comprises m bits, the m bits are sequentially in a one-to-one correspondence with the identifiers of the m credential holder groups, each bit indicates whether a corresponding network supports a credential holder group corresponding to the bit, m and n are integers greater than 0, and k is an integer less than or equal to n; and
sending, by the access network device, the system information block to a terminal device.

14. The method according to claim 13, wherein the system information block is a system information block 1.

15. The method according to claim 13 or 14, wherein the network is a standalone non-public network SNPN.

16. A communication method, comprising:
receiving, by a terminal device, a system information block from an access network device, wherein the system information block comprises information about n networks, identifiers of m credential holder groups, and k bitmaps, information about a network comprises an identifier of the network and first indication information corresponding to the network, the first indication information indicates that the network supports a terminal device in performing access by using a credential of a credential holder, one bitmap indicates a credential holder group supported by one corresponding network, each bitmap comprises m bits, the m bits are sequentially in a one-to-one correspondence with the identifiers of the m credential holder groups, each bit indicates whether a corresponding network supports a credential holder group corresponding to the bit, m and n are integers greater than 0, and k is an integer less than or equal to n; and
performing, by the terminal device, network selection based on the system information block.

17. The method according to claim 16, wherein the system information block is a system information block 1.

18. The method according to claim 16 or 17, wherein the network is a standalone non-public network SNPN.

19. A communication apparatus, wherein the communication apparatus is an access network device, and comprises:
a processing unit, configured to determine a first system information block of a cell, wherein the first system information block comprises information about n networks, information about a network comprises an identifier of the network and first indication information corresponding to the network, and the first indication information indicates that the network supports a terminal device in performing access by using a credential of a credential holder, wherein
the processing unit is configured to determine a second system information block of the cell, wherein the second system information block comprises identifiers of m credential holder groups and n bitmaps, the n bitmaps are sequentially in a one-to-one correspondence with identifiers of the n networks comprised in the first system information block, each bitmap indicates a credential holder group supported by a corresponding network, each bitmap comprises m bits, the m bits are sequentially in a one-to-one correspondence with the identifiers of the m credential holder groups, each bit indicates whether the corresponding network supports a credential holder group corresponding to the bit, and m and n are integers greater than 0; and
a transceiver unit, configured to send the first system information block and the second system information block to a terminal device.

20. A communication apparatus, wherein the communication apparatus is a terminal device, and comprises:
a transceiver unit, configured to receive a first system information block and a second system information block from an access network device, wherein the first system information block comprises information about n networks, information about a network comprises an identifier of the network and first indication information corresponding to the network, the first indication information indicates that the network supports a terminal device in performing access by using a credential of a credential holder, the second system information block comprises identifiers of m credential holder groups and n bitmaps, the n bitmaps are sequentially in a one-to-one correspondence with identifiers of the n networks comprised in the first system information block, each bitmap indicates a credential holder group supported by a corresponding network, each bitmap comprises m bits, the m bits are sequentially in a one-to-one correspondence with the identifiers of the m credential holder groups, each bit indicates whether the corresponding network supports a credential holder group corresponding to the bit, and m and n are integers greater than 0; and
a processing unit, configured to perform network selection based on the first system information block and the second system information block.

21. A communication apparatus, wherein the communication apparatus is an access network device, and comprises:
a processing unit, configured to determine a system information block of a cell, wherein the system information block comprises information about n networks, identifiers of m credential holder groups, and k bitmaps, information about a network comprises an identifier of the network and first indication information corresponding to the network, the first indication information indicates that the network supports a terminal device in performing access by using a credential of a credential holder, one bitmap indicates a credential holder group supported by one corresponding network, each bitmap comprises m bits, the m bits are sequentially in a one-to-one correspondence with the identifiers of the m credential holder groups, each bit indicates whether a corresponding network supports a credential holder group corresponding to the bit, m and n are integers greater than 0, and k is an integer less than or equal to n; and
a transceiver unit, configured to send the system information block to a terminal device.

22. A communication apparatus, wherein the communication apparatus is a terminal device, and comprises:
a transceiver unit, configured to receive a system information block from an access network device, wherein the system information block comprises information about n networks, identifiers of m credential holder groups, and k bitmaps, information about a network comprises an identifier of the network and first indication information corresponding to the network, the first indication information indicates that the network supports a terminal device in performing access by using a credential of a credential holder, one bitmap indicates a credential holder group supported by one corresponding network, each bitmap comprises m bits, the m bits are sequentially in a one-to-one correspondence with the identifiers of the m credential holder groups, each bit indicates whether a corresponding network supports a credential holder group corresponding to the bit, m and n are integers greater than 0, and k is an integer less than or equal to n; and
a processing unit, configured to perform network selection based on the system information block.

23. A communication apparatus, comprising a processor and a transceiver, wherein the processor and the transceiver are configured to execute a computer program or instructions stored in at least one memory, to enable the apparatus to implement the method according to any one of claims 1 to 6, the method according to any one of claims 7 to 12, the method according to any one of claims 13 to 15, or the method according to any one of claims 16 to 18.

24. A computer-readable storage medium, wherein the storage medium stores a computer program or instructions, and when the computer program or the instructions are executed by a computer, the method according to any one of claims 1 to 6, the method according to any one of claims 7 to 12, the method according to any one of claims 13 to 15, or the method according to any one of claims 16 to 18 is implemented.

25. A computer program product, wherein the computer program product comprises computer program code, and when the computer program code is run on a computer, the method according to any one of claims 1 to 6, the method according to any one of claims 7 to 12, the method according to any one of claims 13 to 15, or the method according to any one of claims 16 to 18 is implemented.
